(19) Europäisches Patentamt
European Patent Office
Office européen des brevets

(11) **EP 1 896 291 B1**

(12) **EUROPÄISCHE PATENTSCHRIFT**

(45) Veröffentlichungstag und Bekanntmachung des Hinweises auf die Patenterteilung:
**15.11.2017  Patentblatt 2017/46**

(51) Int Cl.:
***B60N 2/48*** *(2006.01)*

(21) Anmeldenummer: **06763249.7**

(22) Anmeldetag: **24.05.2006**

(86) Internationale Anmeldenummer:
**PCT/EP2006/062557**

(87) Internationale Veröffentlichungsnummer:
**WO 2006/136485 (28.12.2006 Gazette 2006/52)**

(54) **WHIPLASH OPTIMIERTE KOPFSTÜTZE**

HEADREST FOR PROTECTING AGAINST WHIPLASH

APPUI-TETE OPTIMISE CONTRE LE COUP DE FOUET CERVICAL

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **23.06.2005  DE 102005030313**

(43) Veröffentlichungstag der Anmeldung:
**12.03.2008  Patentblatt 2008/11**

(73) Patentinhaber: **Volkswagen Aktiengesellschaft 38440 Wolfsburg (DE)**

(72) Erfinder:
• **MEIXNER, Armin**
  **38182 Cremlingen (DE)**
• **HELM, Manfred Burkhard, Dr.**
  **38114 Braunschweig (DE)**
• **HOFFMEISTER, Andreas**
  **38104 Braunschweig (DE)**
• **PFÖRTNER, Dirk**
  **38118 Braunschweig (DE)**
• **SCHMUDA VON TRZEBIATOWSKI, Peter**
  **38170 Schöppenstedt (DE)**
• **RADEMACHER, Horst**
  **38550 Isenbüttel (DE)**
• **LÜHRING, Ralf**
  **38102 Braunschweig (DE)**

(74) Vertreter: **Gulde & Partner Patent- und Rechtsanwaltskanzlei mbB Wallstraße 58/59 10179 Berlin (DE)**

(56) Entgegenhaltungen:
EP-A- 1 201 491    DE-A1- 19 850 758
FR-A- 2 741 574    US-A- 4 744 601
US-A- 5 622 405    US-A1- 2005 001 463

**Beschreibung**

Die Erfindung betrifft eine Kopfstütze für einen Fahrzeugsitz, insbesondere für einen Kraftfahrzeugsitz, mit den im Oberbegriff des Anspruchs 1 genannten Merkmalen.

Bekannte crash-aktive Kopfstützen dienen der Verbesserung der Insassensicherheit bei Autounfällen. Während bei konventionellen Kopfstützen das Verletzungsrisiko bei einem Heckcrash selbst bei niedrigen Aufprallgeschwindigkeiten höher ist, kann durch die Verwendung der crash-aktiven Kopfstütze das Risiko des so genannten "Peitschenschlageffekts", einer nachhaltigen Halswirbelsäulenverletzung sowie insbesondere das Risiko des häufig auftretenden Schleudertraumas - eine Überdehnung und Überlastung der Halswirbelsäule und der Haltemuskulatur - drastisch reduziert werden.

Der Peitschenschlageffekt und die dabei im Halswirbeibereich auftretenden Wirbelsäulenverletzungen sind auch unter dem englischen Wort "whiplash" mit der deutschen Bedeutung Schleudertrauma bekannt.

Die crash-aktive Kopfstütze ist derart konzipiert, dass im normalen Fahrbetrieb der Abstand zwischen Kopf und Kopfstütze im Vergleich zu konventionellen Kopfstützen relativ groß ist. Dadurch ist im Normalbetrieb stets ein Maximum an Komfort (Kopffreiheit) gewährleistet. Im Falle eines Heck-Crashs sollte der Abstand zwischen Kopf und Kopfstütze jedoch möglichst gering sein, da dieses Abstandsmaß das Verletzungsrisiko im Halswirbelsäulenbereich maßgeblich beeinflusst.

Zur Vermeidung der Verletzungen im Halswirbelbereich von Personen sind verschiedene Lösungen mit aktiven Kopfstützen bekannt.

Einige Druckschriften, wie die DE 198 00 078 und die DE 198 50 758, lösen das Problem grundsätzlich damit, dass bei einem Heckaufprall durch die träge Masse des Fahrzeuginsassen - "körpergetriggert" - eine erhöhte Belastung auf das Sitzlehnenpolsterteil und dadurch durch weitere technische Anordnungen zwischen Sitzlehnenpolsterteil und Kopfstütze eine Verlagerung der Kopfstütze in Fahrtrichtung ausgelöst wird. Diese Lösungen haben jedoch den Nachteil, dass diese Sicherheitseinrichtungen in Folge der Abhängigkeit von der Masse des Fahrzeuginsassen eine Auslösung der Kopfstütze nicht in jedem Fall gewährleisten können. Insbesondere bei Fahrzeuginsassen mit einem geringeren Körpergewicht besteht die Gefahr, dass diese Sicherheitseinrichtung bei einem Unfall nicht beziehungsweise nicht in vollem Maße wirksam wird.

Bei einer zweiten Gruppe von Kopfstützen wird die Kopfstütze durch zusätzliche, nicht von der Trägheit des Fahrzeuginsassen selbst abhängende - "fremdgetriggerte" - Auslösemechanismen realisiert.

So ist beispielsweise aus der EP 0 593 845 bekannt, in der Kopfstütze einen Gassack unterzubringen. Bei einem Heckaufprall wird dieser über einen Hecksensor gesteuert, durch einen pyrotechnischen Gasgenerator aktiviert und innerhalb sehr kurzer Zeit aufgeblasen. Da der Abstand des Kopfes zur Kopfstütze stark differieren kann, würde beispielsweise bei einem sehr kurzen Abstand der Kopf beim Aktivieren des Gassackes mit einer unerwünschten Belastung nach vorne gestoßen werden. Des Weiteren ist diese Anordnung eines erforderlichen Hecksensors und der erforderlichen pyrotechnischen Mittel sehr aufwendig.

Gegenstand der EP 0 825 061 A2 ist ebenfalls eine Einrichtung zum Verschwenken einer Kopfstütze im Falle eines Heckaufpralles, Die Einrichtung umfasst eine, in die Kopfstütze integrierte, gespannte Biegefeder, die bei einem Heckaufprall entspannt wird und durch die frei werdende Energie zum Verschwenken des Auflageteiles führt. Eingeleitet wird die Schwenkbewegung der Kopfstütze durch einen Trägheitssensor, der bei einer vorbestimmten Beschleunigung die Biegefeder freigibt, indem er selbst um eine Achse relativ zum Fahrzeug nach hinten schwenkbar ist. Nachteilig hierbei ist, dass das Ausführen der Schwenkbewegung der Kopfstütze, bedingt durch die Anordnung der zum Aktivieren und zum Schwenken der Kopfstütze benötigten Bauteile und die Trägheit ihrer Massen, unvermeidbar mit einer längeren Reaktionszeit verbunden ist. Eine extrem hohe Schnelligkeit der Bewegungsabläufe ist jedoch insbesondere in solchen Fällen notwendig, bei denen sie eine unabdingbare Voraussetzung zur Gewährleistung einer sicheren Funktion ist. Bei der Aktivierung von Kopfstützen kann zur Vermeidung von Verletzungen schon ein Zeitbereich von wenigen Millisekunden von entscheidender Bedeutung sein.

Eine weitere sehr aufwendige Lösung einer fremdgetriggerten crash-aktiven Kopfstütze, die im Falle eines Heckcrashs über einen Magneten, der einen magnetischen Impuls enthält, eine Haftplatte freigibt, ist aus der DE 102 60 582 bekannt.

Im Falle eines Heck-Crashs sollte der Abstand zwischen Kopf und Kopfstütze möglichst gering sein, jedoch ist stets ein auch komfortbedingter verbleibender Abstand gegeben, so dass die negativen Folgen nicht vollständig vermieden werden können.

Ausgehend von diesen Vorüberlegungen spielt unabhängig von der Lösung des Problems mit konventionellen Kopfstützen oder aktiven Kopfstützen-Systemen der Aufbau der Kopfstütze selbst ebenfalls eine maßgebliche Rolle bei der erwünschten Schutzwirkung, insbesondere bei der Vermeidung von Halswirbelsäulenverletzungen sowie dem Risiko eines auftretenden Schleudertraumas.

Ein intelligenter Aufbau der Kopfstütze selbst würde bei konventionellen Kopfstützen aber auch bei mit aktiven Auslösesystemen versehenen Kopfstützen an Fahrzeugsitzen das Risiko von Verletzungen bereits in einem bestimmten Maß reduzieren. Gegebenenfalls sind sogar teure aktive Kopfstützen-Systeme verzichtbar, wenn bereits die Kopfstütze selber ausreichende Schutzwirkung bietet.

Durch die Forschung an den aktiven Kopfstützen-Systemen wurde die Entwicklung an der strukturellen Ausbildung der Kopfstützen selbst vernachlässigt. Ausgehend von diesem Stand der Technik setzt die Erfindung an dieser Stelle an und versucht die Ausbildung der Kopfstütze selbst zu verbessern.

Der Erfindung liegt somit die Aufgabe zugrunde, Lösungen für den Aufbau von Kopfstützen anzubieten, bei denen eine Verringerung von Kopf- und/oder HWS-Verletzungen erwartet werden kann und die für konventionelle und aktive Kopfstützensysteme gleichermaßen einsetzbar ist. Die neue zu schaffende Kopfstütze soll nicht nur den rebound des Kopfes aus der Kopfstütze reduzieren, sondern den Kopf möglichst gezielt in einer x-z Ebene führen.

Ausgangspunkt der Erfindung ist eine Kopfstütze für einen Fahrzeugsitz, die einen Kopfstützenrahmen/Kopfstützenkasten und einen den Kopfstützenrahmen/Kopfstützenkasten umgebenden Schaumgrundkörper aufweist, wobei im Moment eines Front- und/oder Heckaufpralls auf ein Fahrzeug ein Kopf eines Sitzbenutzers in mindestens zwei verschiedenen Höhen der Kopfstütze in eine Zwei-Punkt-Anlage bringbar ist. Die Zwei-Punkt-Anfage wird durch einen im oberen Bereich in einer ersten Höhe des Kopfstützenrahmens/Kopfstützenkastens der Kopfstütze angeordneten Schaum des Schaumgrundkörpers mit einem dynamischen Verhalten ausgebildet.

Die erfindungsgemäße Kopfstütze ist gekennzeichnet durch einen im unteren Bereich in einer zweiten Höhe des Kopfstützenrahmens/Kopfstützenkastens im Inneren des Schaumgrundkörpers nahe einer Anlagefläche der Kopfstütze angeordneten und in den Kopfstützenrahmen/Kopfstützenkasten der Kopfstütze einteilig integrierten Crashbalken mit einem dynamischen Verhalten des Crashbalkens und des Schaumes des Schaumgrundkörpers, wobei der Crashbalken das dynamische Verhalten im unteren Bereich der Kopfstütze gegenüber dem restlichen Bereich der Kopfstütze zur Stabilisierung des Kopfes des Sitzbenutzers im Moment eines Front- und/oder Heckaufpralls verändert.

In vorteilhafter Weise wird durch die erfindungsgemäße Kopfstütze eine Stabilisierung und Führung des Kopfes erreicht und der "Peitschenschlageffekt" wird entsprechend reduziert.

In vorteilhafter Weise ist der Kopf des Sitzbenutzers im Mittelschnitt beziehungsweise in einer senkrechten Mittelebene in eine "Zwei-Punkt-Anlage" bringbar, wobei hierunter eine flächige oder linienförmige oder punktuelle Anlage des Kopfes an der Kopfstütze verstanden werden soll.

Bevorzugt ist der Schaumgrundkörper im oberen Bereich der Kopfstütze aus einem ersten Schaum im unteren Bereich der Kopfstütze aus einem zweiten Schaum mit sich unterscheidendem dynamischem Verhalten ausgebildet.

Bevorzugt ist ferner vorgesehen, dass die eingesetzten Schäume unterschiedliche Dichten und/oder Härten und/oder Viskositäten und somit unterschiedliches dynamisches Verhalten aufweisen.

Der erste Schaum ist in bevorzugter Ausgestaltung gegenüber dem zweiten Schaum so ausgestaltet, dass er eine geringere Viskosität und eine geringere Härte aufweist.

Der im oberen Bereich angeordnete erste Schaum ist somit bei dynamischen Belastungen weicher als der zweite Schaum im unteren Bereich der Kopfstütze.

Ferner bevorzugt weist der zweite Schaum eine geschwindigkeitsabhängige Federkennlinie mit einem konstanten Federwert auf. Solche Schäume sind visko-elastisch und werden auch als "crash-aktive" Schäume bezeichnet. Diese visko-elastischen Schäume bewirken im Crashfall durch eine geschwindigkeitsabhängige Federkennlinie mit höher werdender Auftreffgeschwindigkeit des Kopfes auf die Kopfstütze eine höhere Dämpfung, wodurch eine höhere Schutzwirkung für den Insassen erzielt wird.

Erfindungsgemäß ist von Vorteil, dass der im unteren Bereich der Kopfstütze angeordnete Crashbalken in dem aus einem beispielsweise einzigen Schaummaterial ausgebildeten Schaumgrundkörper angeordnet ist, der in oder an dem Kopfstützenrahmen/Kopfstützenkasten des Schaumgrundkörpers so ausbildbar ist, dass er ein verändertes statisches oder dynamisches Verhalten in einem möglichen Crashfall innerhalb der Kopfstütze, insbesondere gegenüber dem restlichen oberen Bereich, im unteren Bereich der Kopfstütze bewirkt.

In bevorzugter Ausgestaltung ist der Crashbalken mit statischem oder dynamischem Verhalten, der vorzugsweise in den Kopfstützenrahmen/Kopfstützenkasten integriert ist oder mit diesem in Verbindung steht, ein Draht, ein Drahtgeflecht, ein Blech, ein Profil, ein geschlitztes Profil oder dergleichen. Ferner ist der Crashbalken als Voll- oder Hohlkörper beispielsweise als Kunststoffkörper oder Schaumkörper ausbildbar, der ebenfalls jeweils statisches oder dynamisches Verhalten aufweisen kann.

Durch die erfindungsgemäße Lösung wird bei auf den Kopf des Insassen wirkenden Trägheitskräften, insbesondere in der x-z-Ebene in z-Richtung bei theoretischer Betrachtung des um die y-Achse wirkenden Drehmomentes $M_y$ im Bereich der Halswirbelsäule des Kopfes des Fahrzeuginsassen ausgehend vom Schwerpunkt des Kopfes an der Anlagefläche des Kopfes an der Kopfstütze ein Kräftepaar ausgebildet, welches durch die entsprechende Verteilung im oberen beziehungsweise unteren Bereich mit dem dazwischen liegenden HCG des Kopfes an der Kopfstütze solche Hebelarme bildet, dass die Kräftepaare eine Reduzierung beziehungsweise Vermeidung des Drehmomentes um die y-Achse und eine Stabilisierung und Führung des Kopfes bewirken. Dadurch wird eine wesentliche Stabilisierung des Kopfes im Crashfall an der Anlagefläche des Kopfes an der Kopfstütze bewirkt.

Aus dem Stand der Technik ist die der Erfindung am nächsten liegende Druckschrift US 5,622,405 A bekannt.

Die erfindungsgemäße Kopfstütze unterscheidet sich von der Kopfstütze der Druckschrift US 5,622,405 A wie folgt. Die Kopfstütze weist keinen im unteren Bereich durch einen in einer zweiten Höhe des Kopfstützenrahmens/Kopfstützenkastens im Inneren des Schaumgrundkörpers nahe einer Anlagefläche der Kopfstütze angeordneten und in den Kopfstützenrahmen/Kopfstützenkasten der Kopfstütze einteilig integrierten Crashbalken mit einem dynamischen Verhalten des Crashbalkens und des Schaumes des Schaumgrundkörpers auf. Das dynamische Verhalten im unteren Bereich der Kopfstütze wird bei der in der US 5,622,405 offenbarten Kopfstütze zur Stabilisierung des Kopfes des Sitzbenutzers im Moment eines Front- und/oder Heckaufpralls nicht durch den Crashbalken und den Schaum des Schaumgrundkörpers der Kopfstütze gegenüber dem restlichen Bereich der Kopfstütze z verändert. Mit anderen Worten ist der Crashbalken im unteren Bereich nicht derart im Inneren des Schaumgrundkörpers angeordnet, dass der Schaum des Schaumgrundkörpers und des Crashbalkens gemeinsam das dynamische Verhalten der Kopfstütze im unteren Bereich der Kopfstütze bestimmen.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:

Figur 1     eine Darstellung des Momentengleichgewichtes um eine y-Achse aufgestellt im HCG (head center of gravity);

Figur 2     eine Darstellung einer Kopfstütze in einer Ausführung mit Darstellung der Abstandsbewertung nach dem IIHS (Insurance Institute of Highway Safety);

Figur 3A    eine Vorderansicht einer erfindungsgemäßen Kopfstütze in einer ersten Ausführungsvariante

Figur 3B    eine Draufsicht gemäß Figur 3A;

Figur 3C    eine perspektivische Ansicht der Kopfstütze von vorn gemäß den Figuren 3A und 3B;

Figur 4A    eine schematische Schnittdarstellung einer erfindungsgemäßen Kopfstütze in einer zweiten Ausführungsvariante;

Figur 4B    eine schematische Schnittdarstellung einer erfindungsgemäßen Kopfstütze in einer dritten Ausführungsvariante;

Figur 5     eine Darstellung einer erfindungsgemäßen Kopfstütze in einer vierten Ausführungsvariante;

Figur 6     eine Darstellung des Momentengleichgewichts um eine y-Achse aufgestellt im HCG (head center of gravity) zur Verdeutlichung der Erfindung im Vergleich zu Figur 1.

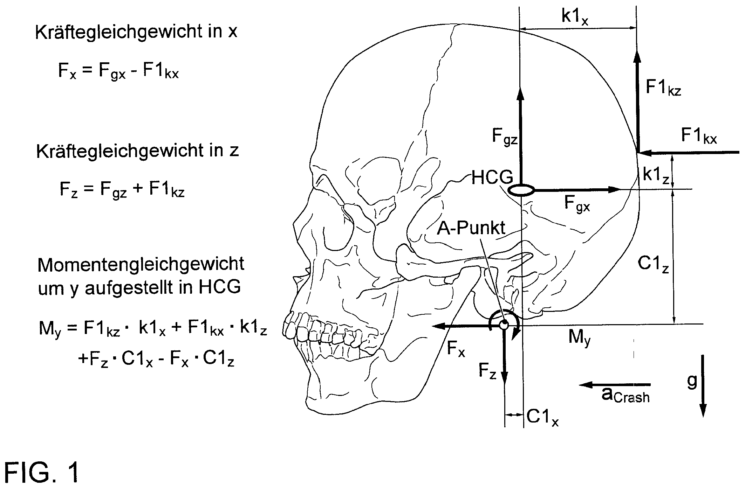

Figur 1 beschreibt zunächst den physikalischen Ausgangspunkt der Überlegungen anhand einer Darstellung des Kopfes (100) eines Insassen. Allgemein festgelegt für solche theoretischen Betrachtungen ist der HCG (head center of gravity) der zentrale Schwerpunkt des Kopfes (100).

Gemäß den festgelegten Richtungen in Fahrtrichtung (x) und vertikal im Fahrzeug (z) sind bei einem Heckcrash mit einer Beschleunigung $a_{crash}$ mathematische Kräftegleichgewichte in x-Richtung und z-Richtung am HCG feststellbar.

Das Kräftegleichgewicht $F_x$ in x-Richtung setzt sich zusammen aus der Differenz einer Kraft $F_{gx}$ der Trägheit des Kopfes (100) und einer resultierenden Kraft $F1_{kx}$, die aus der Kopfstütze (10) auf den Kopf (100) des Insassen in entgegengesetzter Richtung übertragen wird.

$$F_x = F_{gx} - F1_{kx} \qquad [1]$$

Das Kräftegleichgewicht $F_z$ in z-Richtung setzt sich zusammen aus der Summe einer Kraft $F_{gz}$ der Trägheit des Kopfes (100) und einer resultierenden Kraft $F1_{kz}$, die aus der Kopfstütze (10) auf den Kopf (100) des Insassen in z-Richtung wirkt.

$$F_z = F_{gz} + F1_{kz} \qquad [2]$$

Um die y-Achse im Punkt HCG erweitert um die Hebelarme jeweils im Abstand vom HCG ergibt sich somit ein Momentengleichgewicht $M_y$:

$$M_y = F1_{kz} \cdot k1_x + F1_{kx} \cdot k1_z + F_z \cdot C1_x - F_x \cdot C1_z \qquad [3]$$

Das Momentengleichgewicht [3] ist die Summe der jeweiligen Produkte der resultierenden Kräfte $F1_{kz}$ und $F1_{kx}$ und einem ersten Abstand $k1_x$ des HCG vom Angriffspunkt der Kraft $F1_{kz}$ in x-Richtung beziehungsweise einem zweiten Abstand $k1_z$ des HCG vom Angriffspunkt der Kraft $F1_{kx}$ in z-Richtung und dem Produkt der z-Richtung wirkenden Gelenkkraft $F_z$ und dem vertikalen Abstand $C1_x$ zwischen HCG und Atlaspunkt (A-Punkt) abzüglich dem Produkt der Gelenkkraft $F_x$ und dem horizontalen Abstand $C1_z$ wiederum zwischen HCG und Atlaspunkt (A-Punkt).

Ausgehend von den theoretischen Betrachtungen zum Momentengleichgewicht $M_y$ um die y-Achse gemäß Figur 1 wird das Drehmoment $M_y$ des Kopfes 100 durch veränderte Ausbildung der Kopfstütze 10 reduziert, da sich durch die erfindungsgemäße Lösung das Kräftegleichgewicht zugunsten der Gelenkkräfte $F_x$ beziehungsweise $F_z$ verändert.

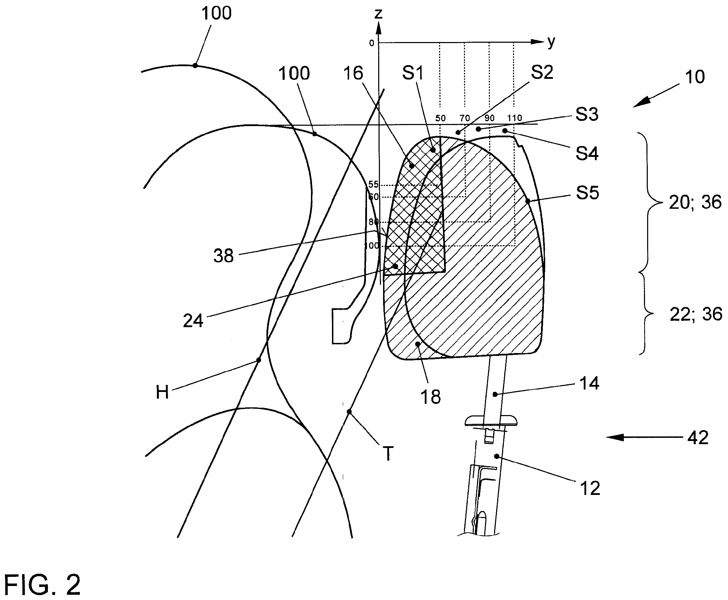

Figur 2 zeigt zur Erläuterung der Erfindung eine Kopfstütze 10, deren Kopfstützenrahmen beziehungsweise Kopfstützenkasten 14 in Kopfstützstangen ausläuft, die in einer Kopfstützenhalterung 12 angeordnet beziehungsweise befestigt sind. Der in der Kopfstütze 10 liegende in Figur 2 nicht sichtbare Teil des Kopfstützenrahmens/Kopfstützenkastens 14 beziehungsweise dessen ausgebildeten Kopfstützstangen sind, wie von Kopfstützen bekannt, höhenverschiebbar in der Kopfstützenhalterung 12 angeordnet.

Die Kopfstütze 10 weist einen Schaumgrundkörper 36 auf, der auf dem Kopfstützenrahmen/Kopfstützenkasten 14 befestigt ist.

Die Kopfstütze 10 ist in einem Messfeld, dem IIHS-Feld, angeordnet. Dieses Messfeld dient den Untersuchungen zur Position von Kopfstützen 10 des "Insurance Institute of Highway Safety" (IIHS) und bildet einen Ausgangspunkt der Erfindung. In Fahrtrichtung 42 ist der Kopf eines Insassen in einer ersten Position 100 und in einer zweiten Position 100' dargestellt. Die erste Position 100 und der Abstand zur Anlagefläche 38 der Kopfstütze 10 beträgt bei einer Lehnenneigung von 24° und Einstellung der Kopfstütze 10 in ihrer obersten Raststellung in diesem Ausführungsbeispiel horizontal zirka 40 mm beziehungsweise vertikal 10 mm, gemessen vom Hinterkopf des Insassen. In der zweiten Position 100' des Kopfes des Insassen ist der Kopf des Insassen bei Lehnenneigung von 25° dargestellt, wodurch sich der Abstand zwischen dem Hinterkopf des Insassen 100' und der Anlagefläche 38 verringert, so dass im Messfeld nur ein horizontaler Abstand von zirka 2,90 mm und ein vertikaler Abstand von 0,90 mm ausgebildet ist.

Diese Werte sind bei einem Wert von 832 mm Oberkante Kopfstütze 10 über dem H-Punkt aufgenommen. Parallel dazu verläuft die Torsolinie T des Insassen.

Ausgehend von diesem Messfeld wertet die IIHS eine Kopfstützenposition mit gut (S2), wenn sich die Kopfstütze im Messfeld zwischen 60 mm in z-Richtung und 70 mm in y-Richtung befindet. Befindet sich die Kopfstütze 10 im Messfeld im Bereich 80 mm in z-Richtung und 90 mm in x-Richtung, so wird von einem "akzeptablen" Standard (S3) gesprochen. "Geringer" Standard (S4) liegt vor, wenn sich die Kopfstütze im Messfeld im Bereich von 100 mm in z-Richtung und 110 mm in x-Richtung befindet. Außerhalb dieses Bereiches liegende Kopfstützen weisen nach der IIHS einen "nichtakzeptablen" Standard (S5) auf. Die in Figur 2 dargestellte Kopfstütze 10 weist einen "sehr guten" Standard (S1) auf, da die Kontur der Kopfstütze 10 einen Bereich von < 55 mm in z-Richtung und < 50 mm in x-Richtung aufweist, in der die Kopfstütze den Schaumgrundkörper 36 ausbildet.

Bei den bisherigen Kopfstützen war der gesamte Schaumgrundkörper 36 aus gleichem Schaummaterial hergestellt. In der dargestellten Lösung Figur 2 wird sichtbar, dass der vordere Bereich 24 der Kopfstütze 10 in einen oberen Bereich 20 und einen unteren Bereich 22 aufgeteilt ist.

Der obere Bereich 20 weist einen ersten Schaum 16 und der untere Bereich 22 einen zweiten Schaum 18 auf.

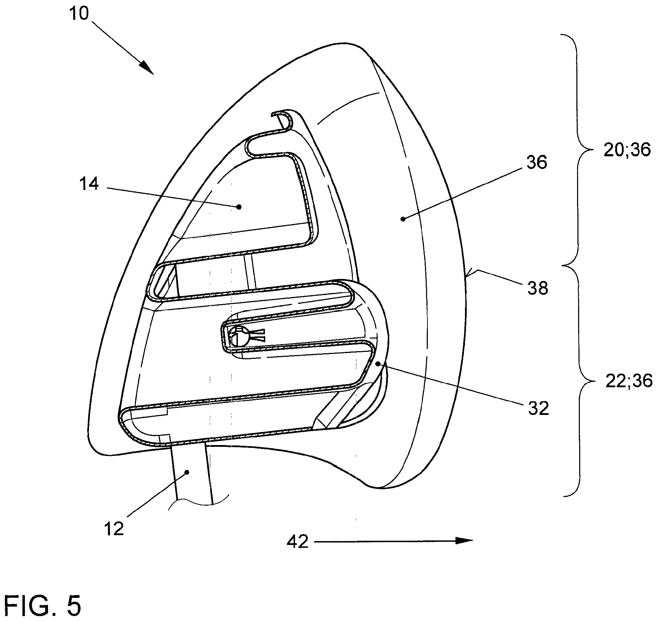

Der erste Schaum 16 weist gegenüber dem zweiten Schaum 18 eine geringere Viskosität und eine geringere Härte auf. Der erste Schaum 16 ist somit gegenüber dem zweiten Schaum 18 weicher, so dass sich im Crashfall bei Eindringen des Kopfes in den oberen weicheren ersten Schaum 16 eine untere härtere Anlagefläche 38 im Bereich des zweiten Schaums 18 ausbildet. Den entgegen der Bewegungsrichtung wirkenden Trägheitskräften $F_{gx}$ beziehungsweise $F_{gz}$ wird somit neu ein Kräftepaar entgegengesetzt, welches aus auf den Hinterkopf des Insassen wirkenden Kräften $F1_{kx}$ und $F2_{kx}$ sowie $F2_{kz}$ und $F1_{kz}$ gebildet wird, wobei sich je nach räumlicher Ausbildung des härteren, zweiten Schaumes 18 im unteren Bereich 22 die zugehörigen Hebelarme $k1_z$ beziehungsweise $k2_z$ sowie $k1_x$ beziehungsweise $k2_x$ verändern. Durch diese Lösung wird insgesamt das auf den Hinterkopf des Insassen 100, 100' wirkende Drehmoment $M_y$ gemäß der mathematischen Darstellung Figur 5, wie später noch weiter erläutert wird, reduziert.

Die Eigenschaften des ersten Schaums 16 beziehungsweise des zweiten Schaums 18 können beeinflusst und verändert werden.

In vorteilhafter Weise kommt es zu einem sanften Abbau der Relativgeschwindigkeit des Kopfes 100, 100' im ersten Schaum 16 und zu einer Stabilisierung des Kopfes 100, 100' im zweiten Schaum 18, wodurch der Effekt des "Peitschenschlages" verringerbar ist.

Durch diese Lösung und die Verringerung des Abstandes der Kopfstütze 10 insgesamt wird durch die Anordnung der Kopfstütze im Standard S1 und die Ausbildung der Kopfstütze 10 der NIC-Index (NIC = Neck Injury Criterion) positiv beeinflusst.

Als zweiter Schaum 18 kommt vorzugsweise ein visko-elastischer Schaum mit einer geschwindigkeitsabhängigen Federkennlinie mit einem konstanten Federkennwert C zum Einsatz. Dieser zweite Schaum 18 wirkt mit seiner geschwindigkeitsabhängigen Federkennlinie so, dass mit höherer Auftreffgeschwindigkeit des Kopfes 100, 100' eine höhere Dämpfung bewirkt wird.

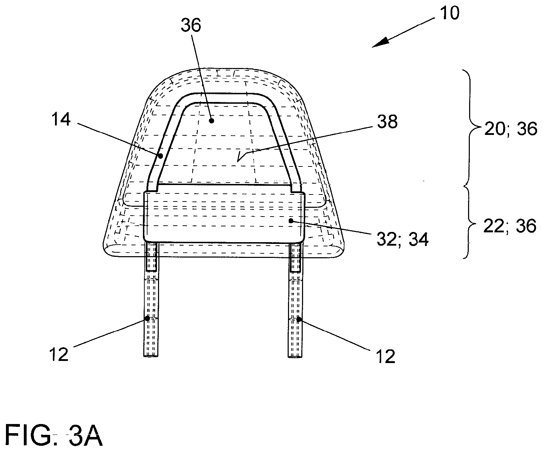

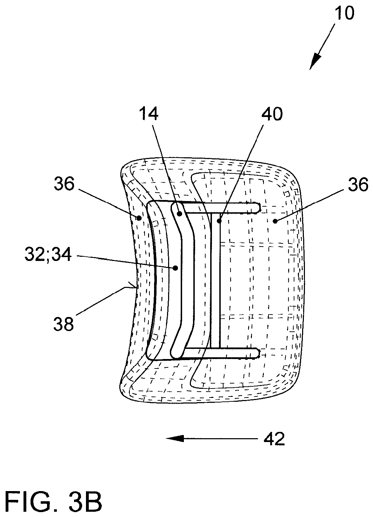

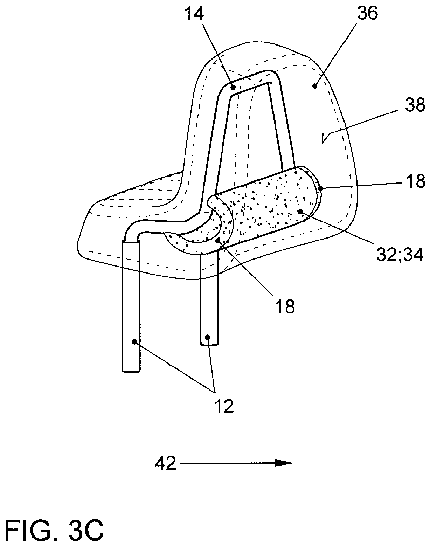

Figur 3A zeigt eine erfindungsgemäße Kopfstütze in einer ersten Ausführungsvariante in einer Vorderansicht einer Kopfstütze 10, wobei die Figuren 3B und 3C zusätzlich eine Draufsicht und eine perspektivische Ansicht der Kopfstütze 10 von vorn bieten.

Für die Teile innerhalb der Figuren 3A bis 3C wurden jeweils gleiche Bezugzeichen verwendet.

Die Kopfstütze 10 in der ersten Ausführungsvariante weist hier einen Kopfstützenrahmen 14 auf, der in Kopfstützhalterungen 12 übergeht.

Die Kopfstütze 10 ist beispielsweise als Schaumgrundkörper 36 aus einem einzigen Schaummaterial hergestellt, kann aber auch aus mehreren Schaummaterialien ausgeführt werden.

Im unteren Bereich 22 der Kopfstütze 10 ist ein Crashbalken angeordnet, der in Figur 3A bis 3C ein Kunststoffkörper 32 oder ein Schaumkörper 34 ist.

Figur 3A zeigt den Kunststoffkörper 32 beziehungsweise Schaumkörper 34 in der ersten Ausführungsvariante als eine Art Einleger, der in den Kopfstützenrahmen 14 eingelegt ist, wobei durch die verschiedenen Materialien Kunststoff oder Schaum im unteren Bereich 22 der Kopfstütze 10 jeweils entweder statisches der dynamisches Verhalten erreichbar ist.

Als Einleger ist hier der Crashbalken in einer Art zweiteiligen Ausführung gestaltet. Durch Integration des Crashbalkens in den Kopfstützenrahmen wird eine einteilige Ausführung geschaffen, die ebenfalls einsetzbar ist.

Figur 3B zeigt die Kopfstütze in der Draufsicht, wobei ersichtlich ist, dass zusätzlich zur Stabilität ein Querträger 40 innerhalb des Kopfstützrahmens 14 angeordnet ist, vor dem in Fahrtrichtung 42 der Kunststoffkörper 32 beziehungsweise der Schaumkörper 34 angeordnet ist.

Die Kopfstütze 10 wirkt, wie bereits beschrieben, entweder mit statischem oder dynamischem Verhalten im Crashfall auf den Hinterkopf des Insassen 100, 100' unter Reduzierung des Drehmomentes $M_y$.

Die zu Figur 2 formulierten Eigenschaften des zweiten Schaums gelten grundsätzlich auch für die Eigenschaften des Schaumkörpers 34.

Figur 3C zeigt eine perspektivische Ansicht, bei der nochmals mit gleichen Bezugzeichen der Crashbalken 32, 34, der an den Kopfstützenrahmen 14 anbringbar oder angeformt oder in den Kopfstützenrahmen 14 integriert sein kann, dargestellt ist.

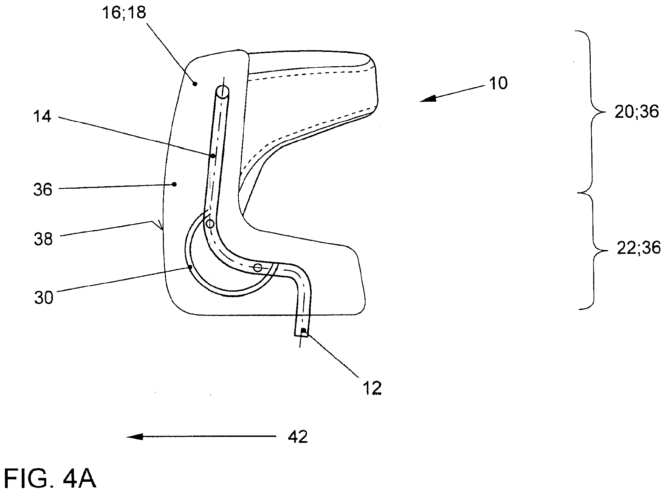

Die Figur 4A zeigt in einer zweiten Ausführungsvariante in einer schematischen Schnittdarstellung der Kopfstütze 10 die Ausbildung der Kopfstütze 10 mit einem Crashbalken, der mittels eines Rohrprofiles 30 ausgestaltet ist.

Das Rohrprofil ist im unteren Bereich 22 der Kopfstütze angeordnet. Somit ergibt sich hier eine "Zwei-Punkt-Anlage" im unteren Bereich 22 durch den aus einem Rohrprofil gebildeten Crashbalken 30 und der im oberen Bereich 20 ausgebildeten Kopfstütze 10, die hier als zweite obere Anlage von dem ersten oder zweiten Schaum 16, 18 und dem Kopfstützenrahmen 14 ausgebildet wird.

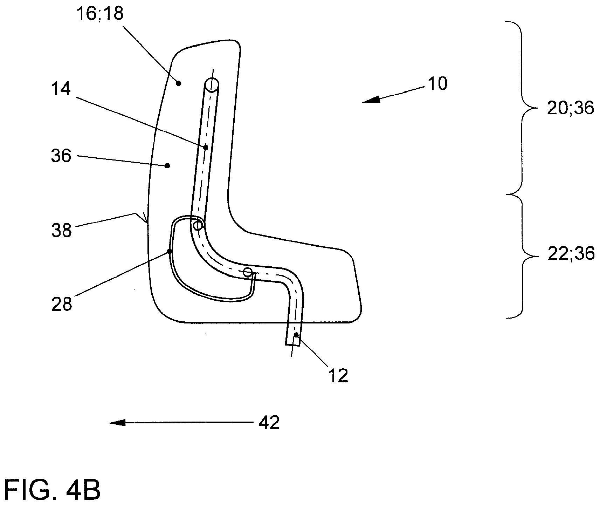

Die Figur 4B zeigt in einer dritten Ausführungsvariante eine weitere schematische Schnittdarstellung der Kopfstütze 10, bei der die Kopfstütze 10 einen Crashbalken ausbildet, der mittels eines Bleches 28 ausgestaltet ist.

Das Blech ist im unteren Bereich 22 der Kopfstütze angeordnet. Somit ergibt sich auch hier eine "Zwei-Punkt-Anlage" im unteren Bereich 22 durch den aus einem Blech gebildeten Crashbalken 30 und der im oberen Bereich 20 ausgebildeten Kopfstütze 10, die hier wiederum als zweite obere Anlage von dem ersten oder zweiten Schaum 16, 18 und dem Kopfstützenrahmen 14 ausgebildet wird.

Im Bereich der Anlagefläche 38, vorzugsweise in einem Abstand von der Anlagefläche 38 von bis zu 16 mm unterhalb der Anlagefläche 38, ist in diesen Ausführungsbeispielen an den Kopfstützenrahmen 14 das Rohr 30 oder das Blech 28 angeformt oder in geeigneter Weise angebracht und stellt somit den Crashbalken im unteren Bereich 22 der Kopfstütze 10 dar.

Der Kopfstützenrahmen 14 kann zusätzlich Querträger 40 aufweisen, die gleichzeitig als Anbringungspunkte für das Rohrprofil 30 (Figur 4A) oder das Blech 28 (Figur 4B) herangezogen werden können.

In den Figuren nicht dargestellt, doch ebenso zur Erfindung zugehörig, ist die Kombination zwischen erstem und zweitem Schaum 16, 18 im oberen Bereich 20 beziehungsweise im unteren Bereich 22 und die Anordnung eines der erläuterten Crashbalken 26, 28, 30, 32, 34. Im Unterschied zu der Figur 2 wird erfindungsgemäß im zweiten Schaum 18 im unteren Bereich 22 zusätzlich zu den Eigenschaften des vorzugsweise visko-elastischen Schaums ein Crashbalken 26, 28, 30, 32, 34 nahe der Anlagefläche 38 der Kopfstütze 10 angeordnet.

Durch diese Maßnahmen werden zusätzlich variable dynamische und statische Wirkungen der Kopfstütze 10 überlagert, da der jeweilige Crashbalken 26, 28, 30, 32, 34, 36 sowohl mit statischen Eigenschaften als auch mit dynamischen Eigenschaften versehen werden kann.

Eine weitere vierte Ausführungsvariante mit integriertem Crashbalken im Kopfstützenkasten 14 zeigt Figur 5. Der Crashbalken 32 ist in dem unteren Bereich 22 des Kopfstützenkastens 14 integriert.

Der Crashbalken 32 ist dabei Teil des beispielsweise aus Kunststoff hergestellten Kopfstützenkastens 14 und kann alle Formen annehmen, die innerhalb des Schaumgrundkörpers 38 einen zweiten Anlagepunkt des Kopfes des Sitzbenutzers unterhalb der Höhe des Schwerpunktes an der Kopfstütze 10 ermöglichen.

Als Bestandteil des Kopfstützenrahmens/Kopfstützenkastens 14 oder auch als mit dem Kopfstützenrahmen/Kopfstützenkasten 14 verbindbares Bauteil ist der Crashbalken 26, 28, 30, 32, 34 aus Kunststoffspritzguss herstellbar.

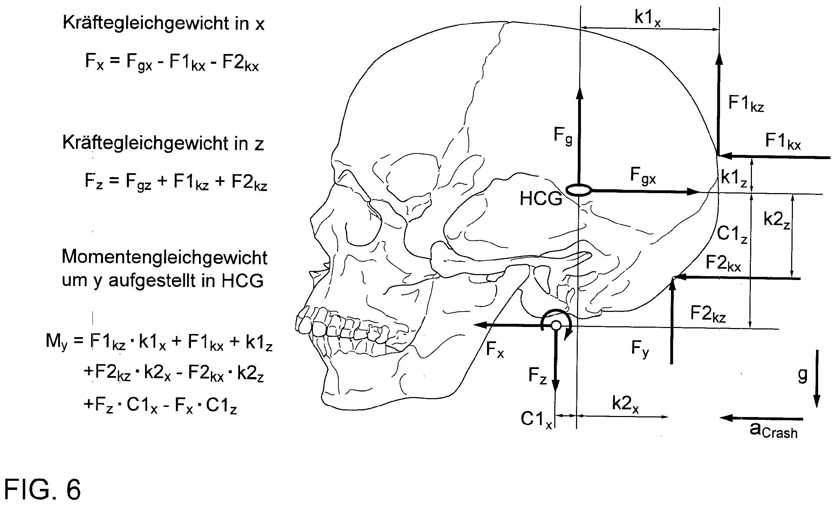

Figur 6 erläutert abschließend in mathematischer Darstellung und Erläuterung die Wirkung der im Detail beschriebenen Lösung anhand der sich ausbildenden Anlagefläche 38 beziehungsweise des sich ausbildenden Anlagepunktes im unteren Bereich 22 der Kopfstütze 10, die im Vergleich zu Figur 1 ein Kräftepaar unter Veränderung des Drehmomentes $M_y$ um die y-Achse (y-y) aufweist.

Gemäß Figur 5 ergibt sich durch die in Figur 3A bis 4C beschriebenen Lösungen, insbesondere im Vergleich zu der Lösung in Figur 1 und ein reduziertes Drehmoment, da in die Formeln zum Momentengleichgewicht andere Kraftvektoren einfließen.

Das sich um die y-Achse im Punkt HCG ergebende Momentengleichgewicht $M_y$ [6] ausgehend von den Formeln zu den Kräftegleichgewichten $F_x$ und $F_z$ [4] und [5] lautet nunmehr:

$$F_x = F_{gx} - F1_{kx} - F2_{kx} \qquad [4]$$

$$F_z = F_{gz} + F1_{kz} + F2_{kz} \qquad [5]$$

$$M_y = F1_{kz} \cdot k1_x + F1_{kx} \cdot k1_z + F2_{kz} \cdot k2_x - F2_{kx} \cdot k2_z + F_z \cdot C1_x - F_x \cdot C1_z \qquad [6]$$

Das Momentengleichgewicht ist die Summe der jeweiligen Produkte der Kräfte $F1_{kz}$ und $F1_{kx}$ und einem ersten Abstand $k1_x$ des HCG vom Angriffspunkt der Kraft $F_{kz}$ in x-Richtung beziehungsweise einem zweiten Abstand $k1_z$ des HCG vom Angriffspunkt der Kraft $F_{kx}$ in z-Richtung und dem Produkt der in z-Richtung wirkenden Trägheitskraft $F_z$ und dem vertikalen Abstand $C1_x$ zwischen HCG vom Atlaspunkt (A-Punkt) abzüglich dem Produkt der Trägheitskraft $F_x$ und dem horizontalen Abstand $C1_z$ zwischen HCG und Atlaspunkt, wobei die Produkte der Terme jeweils $F2_{kz} \cdot k2_x - F2_{kx} \cdot k2_z$ eine in das Moment eingehende Kraftkomponente in z-Richtung und x-Richtung darstellen.

Im Momentengleichgewicht $M_y$ kommt durch die beschriebenen Lösungen im Wesentlichen im unteren Bereich 22 der Kopfstütze 100' die zusätzlich vorhandene eingeleitete Kraft $F2_{kz}$ in vertikaler Richtung als Produkt mit ihrem zweiten Abstand vom HCG und die zusätzlich eingeleitete Kraft $F2_{kx}$ in horizontaler Richtung mit ihrem zweiten Abstand vom HCG $k2_z$ entgegen der Trägheitskraft $F_{gx}$ beziehungsweise $F_{gz}$ zum Tragen.

Heben sich alle Kräfte der Formel [6] auf, so wird eine vollständige Vermeidung des Drehmomentes $M_y$ - kein Peitschenschlageffekt - erzielt. Da eine solche Reduzierung zu Null in der Praxis durch unterschiedliche Größen der Insassen und durch die unbekannten einwirkenden Kräfte von außen im Crashfall und durch den nicht auf Null reduzierbaren Abstand zwischen der Anlagefläche (38) der Kopfstütze 10 und dem Kopf 100, 100' des Insassen (siehe Messfeld, Figur 2) nicht für alle möglichen Crashfälle und Insassen unter stets gleichen Bedingungen reproduzierbar möglich ist, ist jedoch durch die Erfindung in vorteilhafter Weise mindestens eine Reduzierung des verbleibenden Momentes $M_y$ auf der y-y-Achse gegeben.

BEZUGSZEICHENLISTE

10    Kopfstütze
12    Kopfstützen-Halterung
14    Kopfstützenrahmen/Kopfstützenkasten
16    erster Schaum
18    zweiter Schaum

| 20 | oberer Bereich |
|---|---|
| 22 | unterer Bereich |
| 24 | vorderer Bereich |
| 26 | Crashbalken - Draht/Drahtgeflecht |
| 28 | Crashbalken - Blech |
| 30 | Crashbalken - Profil |
| 32 | Crashbalken - Kunststoffkörper |
| 34 | Crashbalken - Schaumkörper |
| 36 | Schaumgrundkörper (Polster) |
| 38 | Anlagefläche |
| 40 | Querträger |
| 42 | Fahrtrichtung |
| 100 | Kopf des Insassen (Lehnenneigung 24°) |
| 100' | Kopf des Insassen (Lehnenneigung 25°) |

| H | H-Punkt-Linie |
|---|---|
| T | Torso-Linie |

| S1 | sehr guter Standard |
|---|---|
| S2 | guter Standard |
| S3 | akzeptabler Standard |
| S4 | geringer Standard |
| S5 | nicht akzeptabler Standard |

| $a_{crash}$ | Beschleunigung Heckcrash |
|---|---|
| g | Erdbeschleunigung |
| c | Federkennwert |
| HWS | Halswirbelsäule |
| HCG | head center of gravity (Schwerpunkt des Kopfes) |
| A-Punkt | Atlaspunkt |

| index x | x-Richtung |
|---|---|
| index y | y-Richtung |
| index z | z-Richtung |
| x | x-Richtung |
| y | y-Richtung |
| z | z-Richtung |

Kräfte

| $F_x$ | Kraftkomponenten in x-Richtung |
|---|---|
| $F1_{kx}$ | erste Kraft (x-Richtung) |
| $F2_{kx}$ | zweite Kraft (x-Richtung) |
| $F_z$ | Kraftkomponenten in z-Richtung |
| $F1_{kz}$ | erste Kraft (z-Richtung) |
| $F2_{kz}$ | zweite Kraft (z-Richtung) |
| $F_{gz}$ | Trägheitskraft des Kopfes 100 in z-Richtung |
| $F_{gx}$ | Trägheitskraft des Kopfes 100 in x-Richtung |

Moment

| $M_y$ | Moment um y-Achse |
|---|---|

Abstände

| $k1_x$ | erster Abstand in (x-Richtung) zwischen HCG und der Kraft $F1_{kz}$ |
|---|---|
| $k1_z$ | erster Abstand (z-Richtung) zwischen HCG und der Kraft $F1_{kx}$ |
| $c1_x$ | erster Abstand (x-Richtung) vom HCG zum Atlas-Punkt |

$c1_z$    erster Abstand (y-Richtung) vom HCG zum Atlas-Punkt
$k2_x$    zweiter Abstand (x-Richtung) HCG - Kraft $F2_{kz}$
$k2_z$    zweiter Abstand (z-Richtung) HCG - Kraft $F2_{kx}$

**Patentansprüche**

1.  Kopfstütze (10) für einen Fahrzeugsitz, die einen Kopfstützenrahmen/Kopfstützenkasten (14) und einen den Kopfstützenrahmen/Kopfstützenkasten (14) umgebenden Schaumgrundkörper (36) aufweist, wobei im Moment eines Front- und/oder Heckaufpralls auf ein Fahrzeug ein Kopf (100, 100') eines Sitzbenutzers in mindestens zwei verschiedenen Höhen ($k1_z$, $k2_z$) der Kopfstütze (10) in eine Zwei-Punkt-Anlage bringbar ist, wobei die Zwei-Punkt-Anlage ausgebildet wird

    - durch einen im oberen Bereich (20) in einer ersten Höhe ($k1_z$) des Kopfstützenrahmens/Kopfstützenkastens (14) der Kopfstütze (10) angeordneten Schaum (16) des Schaumgrundkörpers (36) mit einem dynamischen Verhalten,
    - **gekennzeichnet durch** einen im unteren Bereich (22) in einer zweiten Höhe ($k2_z$) des Kopfstützenrahmens/Kopfstützenkastens (14) im Inneren des Schaumgrundkörpers (36) nahe einer Anlagefläche der Kopfstütze (10) angeordneten und in den Kopfstützenrahmen/Kopfstützenkasten (14) der Kopfstütze (10) einteilig integrierten Crashbalken (26, 28, 30, 32, 34) mit einem dynamischen Verhalten des Crashbalkens (26, 28, 30, 32, 34) und des Schaumes (16) des Schaumgrundkörpers (36),
    - wobei der Crashbalken (26, 28, 30, 32, 34) das dynamische Verhalten im unteren Bereich (22) der Kopfstütze (10) gegenüber dem restlichen Bereich der Kopfstütze (10) zur Stabilisierung des Kopfes des Sitzbenutzers im Moment eines Front- und/oder Heckaufpralls verändert.

2.  Kopfstütze nach Anspruch 1, **gekennzeichnet dadurch, dass** der Schaumgrundkörper (36) im oberen Bereich (20) der Kopfstütze (10) aus einem ersten Schaum (16) im unteren Bereich (22) der Kopfstütze (10) aus einem zweiten Schaum (18) mit sich unterscheidendem dynamischen Verhalten ausgebildet ist.

3.  Kopfstütze nach Anspruch 2, **dadurch gekennzeichnet, dass** die Schäume (16, 18) unterschiedliche Dichten und/oder Härten und/oder Viskositäten und somit unterschiedliches dynamisches Verhalten aufweisen.

4.  Kopfstütze nach Anspruch 3, **dadurch gekennzeichnet, dass** der erste Schaum (16) gegenüber dem zweiten Schaum (18) eine geringere Viskosität und eine geringere Härte aufweist.

5.  Kopfstütze nach Anspruch 4, **dadurch gekennzeichnet, dass** der zweite Schaum (18) ein visko-elastischer Schaum mit einer geschwindigkeitsabhängigen Federkennlinie und einem konstanten Federkennwert (c) ist.

6.  Kopfstütze nach Anspruch 5, **dadurch gekennzeichnet, dass** der zweite Schaum (18) durch die geschwindigkeitsabhängige Federkennlinie mit höherer Geschwindigkeit eine höhere Dämpfung des Kopfes (100') an der Kopfstütze (10) bewirkt.

7.  Kopfstütze nach Anspruch 1, **dadurch gekennzeichnet, dass** der Crashbalken (26, 28, 30, 32, 34) Draht oder Drahtgeflecht (26), ein Blech (28), ein Profil (30) oder ein Kunststoffkörper (32) oder ein Schaumkörper (34) oder dergleichen ist.

8.  Kopfstütze nach Anspruch 1 und 2, **dadurch gekennzeichnet, dass** der Crashbalken (26, 28, 30, 32, 34) als Schaumkörper (34) innerhalb des Kopfstützenrahmen/Kopfstützenkastens (14) die Eigenschaften des zweiten Schaums (18) nach mindestens einem der Ansprüche 3 bis 6 aufweist und der Schaumgrundkörper (36) dem ersten Schaum (16) nach mindestens einem der Ansprüche 3 bis 6 entspricht.

9.  Kopfstütze (10) nach Anspruch 1, **dadurch gekennzeichnet, dass** die Kopfstütze (10) im Fall eines Heckaufpralls auf das Kraftfahrzeug relativ zur Rückenlehne feststehend oder zumindest ein Teil der Kopfstütze in Richtung des Fahrzeuginsassen unverzüglich verlagerbar ist.

**Claims**

**1.** Headrest (10) for a vehicle seat, the headrest having a headrest frame/headrest box (14) and a foam main body (36) surrounding the headrest frame/headrest box (14), wherein, at the moment of a front/rear impact against a vehicle, a seat user's head (100, 100') can be brought into two-point contact at at least two different heights ($k1_z$, $k2_z$) of the headrest (10), wherein the two-point contact is formed

- by a foam (16) of the foam main body (36), said foam bering arranged in the upper region (20) at a first height ($k1_z$) of the headrest frame/headrest box (14) of the headrest (10) and having a dynamic behaviour,
- **characterized by** a crash bar (26, 28, 30, 32, 34) which is arranged in the lower region (22) at a second height ($k2_z$) of the headrest frame/headrest box (14) in the interior of the foam main body (36) in the vicinity of a contact surface of the headrest (10) and is integrated integrally in the headrest frame/headrest box (14) of the headrest (10), with a dynamic behaviour of the crash bar (26, 28, 30, 32, 34) and of the foam (16) of the foam main body (36),
- wherein the crash bar (26, 28, 30, 32, 34) changes the dynamic behaviour in the lower region (22) of the headrest (10) in relation to the remaining region of the headrest (10) at the moment of a front and/or rear impact in order to stabilize the seat user's head.

**2.** Headrest according to Claim 1, **characterized in that** the foam main body (36) in the upper region (20) of the headrest (10) is formed from a first foam (16) and, in the lower region (22) of the headrest (10), is formed from a second foam (18) with a differing dynamic behaviour.

**3.** Headrest according to Claim 2, **characterized in that** the foams (16, 18) have different densities and/or hardnesses and/or viscosities and therefore a different dynamic behaviour.

**4.** Headrest according to Claim 3, **characterized in that** the first foam (16) has a lower viscosity and a lower hardness than the second foam (18).

**5.** Headrest according to Claim 4, **characterized in that** the second foam (18) is a visco-elastic foam with a speed-dependent spring characteristic and a constant spring characteristic value (c).

**6.** Headrest according to Claim 5, **characterized in that** the second foam (18) brings about greater damping of the head (100') on the head rest (10) at a higher speed by means of the speed-dependent spring characteristic.

**7.** Headrest according to Claim 1, **characterized in that** the crash bar (26, 28, 30, 32, 34) is wire or wire mesh (26), a plate (28), a profile (30) or a plastics body (32) or a foam body (34) or the like.

**8.** Headrest according to Claims 1 and 2, **characterized in that** the crash bar (26, 28, 30, 32, 34), as a foam body (34) within the headrest frame/headrest box (14), has the properties of the second foam (18) according to at least one of Claims 3 to 6, and the foam main body (36) corresponds to the first foam (16) according to at least one of Claims 3 to 6.

**9.** Headrest (10) according to Claim 1, **characterized in that**, in the event of a rear impact against the motor vehicle, the headrest (10) is stationary relative to the backrest, or at least part of the headrest is immediately shiftable in the direction of the vehicle occupant.

**Revendications**

**1.** Appui-tête (10) pour un siège de véhicule, qui présente un cadre d'appui-tête/un caisson d'appui-tête (14) et un corps de base en mousse (36) entourant le cadre d'appui-tête/le caisson d'appui-tête (14), dans lequel, au moment d'une collision par l'avant et/ou par l'arrière contre un véhicule, une tête (100, 100') d'un utilisateur du siège peut être amenée en appui par deux points à au moins deux hauteurs différentes ($k1_z$, $k2_z$) de l'appui-tête (10), l'appui par deux points étant réalisé

- par une mousse (16) du corps de base en mousse (36) ayant un comportement dynamique, disposée dans la région supérieure (20) à une première hauteur ($k1_z$) du cadre d'appui-tête/du caisson d'appui-tête (14) de l'appui-tête (10),
- **caractérisé par** une poutre de collision (26, 28, 30, 32, 34) disposée dans la région inférieure (22) à une deuxième hauteur (k2$_z$) du cadre d'appui-tête/du caisson d'appui-tête (14) à l'intérieur du corps de base en mousse (36) à proximité d'une surface d'appui de l'appui-tête (10) et intégré d'une seule pièce dans le cadre d'appui-tête/le caisson d'appui-tête (14) de l'appui-tête (10), avec un comportement dynamique de la poutre de collision (26, 28, 30, 32, 34) et de la mousse (16) du corps de base en mousse (36),

- la poutre de collision (26, 28, 30, 32, 34) modifiant le comportement dynamique dans la région inférieure (22) de l'appui-tête (10) par rapport au reste de la région de l'appui-tête (10) pour stabiliser la tête de l'utilisateur du siège au moment d'une collision par l'avant et/ou par l'arrière.

**2.** Appui-tête selon la revendication 1, **caractérisé en ce que** le corps de base en mousse (36) est réalisé dans la région supérieure (20) de l'appui-tête (10) à partir d'une première mousse (16) et dans la région inférieure (22) de l'appui-tête (10) à partir d'une deuxième mousse (18) ayant un comportement dynamique différent.

**3.** Appui-tête selon la revendication 2, **caractérisé en ce que** les mousses (16, 18) présentent des densités différentes et/ou des duretés différentes et/ou des viscosités différentes et par conséquent un comportement dynamique différent.

**4.** Appui-tête selon la revendication 3, **caractérisé en ce que** la première mousse (16) présente, par rapport à la deuxième mousse (18), une plus faible viscosité et une plus faible dureté.

**5.** Appui-tête selon la revendication 4, **caractérisé en ce que** la deuxième mousse (18) est une mousse viscoélastique avec une courbe caractéristique de ressort dépendant de la vitesse et une caractéristique de ressort constante (c).

**6.** Appui-tête selon la revendication 5, **caractérisé en ce que** la deuxième mousse (18) produit, du fait de la courbe caractéristique de ressort dépendant de la vitesse avec une plus grande vitesse, un amortissement supérieur de la tête (100') au niveau de l'appui-tête (10).

**7.** Appui-tête selon la revendication 1, **caractérisé en ce que** la poutre de collision (26, 28, 30, 32, 34) est un fil métallique ou un treillis de fil métallique (26), une tôle (28), un profilé (30) ou un corps en plastique (32) ou un corps en mousse (34) ou similaire.

**8.** Appui-tête selon la revendication 1 et 2, **caractérisé en ce que** la poutre de collision (26, 28, 30, 32, 34) présente, en tant que corps en mousse (34) à l'intérieur du cadre d'appui-tête/du caisson d'appui-tête (14) les propriétés de la deuxième mousse (18) selon au moins l'une quelconque des revendications 3 à 6, et le corps de base en mousse (36) correspond à la première mousse (16) selon au moins l'une quelconque des revendications 3 à 6.

**9.** Appui-tête (10) selon la revendication 1, **caractérisé en ce que** l'appui-tête (10), dans le cas d'une collision par l'arrière sur le véhicule automobile, est fixe par rapport au dossier ou au moins une partie de l'appui-tête peut être déplacée instantanément dans la direction de l'occupant du véhicule.

Kräftegleichgewicht in x

$$F_x = F_{gx} - F1_{kx}$$

Kräftegleichgewicht in z

$$F_z = F_{gz} + F1_{kz}$$

Momentengleichgewicht um y aufgestellt in HCG

$$M_y = F1_{kz} \cdot k1_x + F1_{kx} \cdot k1_z$$
$$+ F_z \cdot C1_x - F_x \cdot C1_z$$

FIG. 1

FIG. 2

10

20; 36

22; 36

42

14

12

S2

S3

S4

S5

S1

y

z

110

90

70

50

55

60

80

100

16

18

100

100

100

38

24

T

H

FIG. 3A

FIG. 3B

FIG. 3C

EP 1 896 291 B1

16;18

14

36

38

30

10

20;36

22;36

12

42

FIG. 4A

FIG. 4B

EP 1 896 291 B1

FIG. 5

Kräftegleichgewicht in x

$$F_x = F_{gx} - F1_{kx} - F2_{kx}$$

Kräftegleichgewicht in z

$$F_z = F_{gz} + F1_{kz} + F2_{kz}$$

Momentengleichgewicht um y aufgestellt in HCG

$$M_y = F1_{kz} \cdot k1_x + F1_{kx} + k1_z$$
$$+ F2_{kz} \cdot k2_x - F2_{kx} \cdot k2_z$$
$$+ F_z \cdot C1_x - F_x \cdot C1_z$$

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19800078
- DE 19850758
- EP 0593845 A
- EP 0825061 A2
- DE 10260582
- US 5622405 A